Europäisches Patentamt

European Patent Office

Office européen des brevets

(11) Veröffentlichungsnummer: **0 325 679 B1**

(12)
# EUROPÄISCHE PATENTSCHRIFT

(45) Veröffentlichungstag der Patentschrift: **02.01.92**

(51) Int. Cl.5: **F16H 61/46**, F16H 47/02

(21) Anmeldenummer: **88102917.7**

(22) Anmeldetag: **26.02.88**

(54) **Automotive Antriebseinrichtung für Maschinen und Fahrzeuge.**

(30) Priorität: **14.01.88 DE 3800893**

(43) Veröffentlichungstag der Anmeldung:
**02.08.89 Patentblatt 89/31**

(45) Bekanntmachung des Hinweises auf die
Patenterteilung:
**02.01.92 Patentblatt 92/01**

(84) Benannte Vertragsstaaten:
**DE FR GB IT SE**

(56) Entgegenhaltungen:
**EP-A- 0 182 616**
**US-A- 4 170 153**
**US-A- 4 229 998**

(73) Patentinhaber: **Hydromatik GmbH**
**Glockeraustrasse 2**
**W-7915 Elchingen 2(DE)**

(72) Erfinder: **Walzer, Winfried, Dr.**
**Lindenstrasse 13**
**W-7915 Elchingen 3(DE)**
Erfinder: **Reistle, Wolfgang**
**Gartenstrasse 20**
**W-7907 Hörvelsingen(DE)**

(74) Vertreter: **Körber, Wolfhart, Dr.rer.nat. et al**
**Patentanwälte Dipl.-Ing. H. Mitscherlich**
**Dipl.-Ing. K. Gunschmann Dr.rer.nat. W. Kör-**
**ber Dipl.Ing. J. Schmidt-Evers Dipl.-Ing. W.**
**Melzer Steinsdorfstrasse 10**
**W-8000 München 22(DE)**

**Beschreibung**

Die Erfindung bezieht sich auf eine Antriebseinrichtung nach dem Oberbegriff des Anspruchs 1.

Ein Antriebsmotor mit durch ein Einstellglied stufenlos veränderlicher Drehzahl erzeugt ein annähernd von der Drehzahl unabhängiges Drehmoment. Fahrzeuge und Arbeitsmaschinen benötigen jedoch zur Überwindung von Fahrwiderständen wie Steigungen, zur Erzeugung von Schub- bzw. Zugkräften oder zum Beschleunigen stark wechselnde Antriebskräfte. Dabei soll die installierte Antriebsleistung möglichst vollständig als Arbeitsleistung in der Antriebseinrichtung umgesetzt werden. Diese Forderung wird durch einen zwischen dem Antriebsmotor und der Antriebswelle der Antriebseinrichtung eingeschalteten Wandler mit einem Drehzahlregler erfüllt, der den Wandler in Abhängigkeit des Lastzustandes des Antriebsmotors unter Berücksichtigung von dem Lastzustand entsprechenden Steuer- oder Regelsignalen so regelt, daß eine angestrebte Drehzahldrückung des Antriebsmotors nicht unterschritten wird. Als Drehzahldrückung wird der Unterschied bzw. das Verhältnis zwischen der durch das Einstellglied vorgegebenen Drehzahl und der sich unter der Last einstellenden Drehzahl des Antriebsmotors bezeichnet. Als Wandler eignet sich vorzüglich ein hydrostatisches Getriebe und zwar insbesondere aufgrund seiner baulichen Vorteile und aufgrund der Möglichkeit des Eingriffs in die Verstellung der Hydropumpe und/oder des Hydromotors. Es ist jedoch auch ein mechanischer Wandler einsetzbar, z.B. ein stufenlos verstellbares mechanisches Getriebe.

Bekannte Antriebseinrichtungen sind als Fahrantrieb insbesondere für Baumaschinen wie Radlader, Bagger und Erdschieber sowohl für Vorwärts- als auch Rückwärtsfahrt eingerichtet, wobei sie eine hydraulische Regelvorrichtung mit einem Stellkolben aufweisen, welcher durch Federn in seiner Mittellage zentriert ist. Der Stellkolben ist mit der Schwenkwiege der Hydropumpe formschlüssig verbunden. Ein vorgeschaltetes Fahrtrichtungsventil legt die Verstellrichtung des Stellkolbens und damit die Förderrichtung der Hydropumpe fest. Die Größe des Verstellweges und damit das Fördervolumen der Hydropumpe ist abhängig von der Größe eines Steuerdrucks, der von einer mit der Hydropumpe synchron angetriebenen Hilfspumpe konstanten Fördervolumens erzeugt wird und den Stellkolben beaufschlagt. Der drehzahlproportionale Förderstrom der Hilfspumpe erzeugt an einer Blende einen Druckabfall , der dazu ausgenutzt wird, mittels eines Steuerkolbens den Steuerdruck einzustellen Ein solches Steuerventil, das auf dem vorliegenden Fachgebiet unter dem Begriff "Druckwaage" bekannt ist, ist in der DE-C 21 47 437 beschrieben und dargestellt.

In der EP-A 0182616 ist eine Regeleinrichtung für ein stufenlos verstellbares Getriebe, das einer Brennkraftmaschine nachgeschaltet ist, beschrieben. Dabei wird zur Regelung der Abtriebsdrehzahl des Getriebes in Abhängigkeit von einer mittels Signalgebern ermittelten Drehzahlabweichung von einer gewünschten Drehzahl der Brennkraftmaschine bei Auftreten der genannten Drehzahlabweichung das Getriebe auf ein anderes Übersetzungsverhältnis geregelt. Als Drehzahlabweichung nach oben oder unten gelten dabei Abweichungen von der Drehzahl des günstigsten Brennstoffverbrauches der Brennkraftmaschine.

Es ist auch schon eine Antriebseinrichtungen vorgeschlagen worden, bei der ein fest vorgegebener Zusammenhang (Steuerkennlinie) zwischen dem Einstellglied des Antriebsmotors und dem Verstellglied des zugehörigen Wandlers zu dessen Drehzahl- bzw. Fördermengeneinstellung besteht, wobei durch einen Lastbegrenzungsregler eine Überbelastung (Abwürgen) des Antriebsmotors verhindert wird.

Bei den vorbeschriebenen Antriebseinrichtungen wird bei einer zu großen Drückung des Antriebsmotors der zugehörige Wandler so geregelt, daß eine bestimmte Drehzahl des Antriebsmotors nicht unterschritten wird, wodurch insbesondere bei einem Verbrennungsmotor wie einem Dieselmotor ein Abwürgen vermieden und insbesondere beim Vorhandensein eines nachgeordneten Schaltgetriebes ein hinsichtlich Leistungsausnutzung und Kraftstoffverbrauch günstiger Drehzahlbereich angestrebt wird.

Alle diese Antriebseinrichtungen bekannter Art besitzen eine fest eingestellte Kennlinie, wodurch diejenigen Drehzahlen des Antriebsmotors festgelegt sind, ab welchen die Lastbegrenzungsregelung zum Einsatz kommt.

Wird also z.B. bei der jeweiligen Stellung des Gaspedals die zulässige Drehzahldrückung des Antriebsmotors (welche durch die die fest eingestellte Kennlinie definiert ist) nicht unterschritten, so wird bei den bekannten Ausgestaltungen der Wandler mit zunehmender Antriebsmotordrehzahl auf zunehmendes Übersetzungsverhältnis gesteuert, was bei einem hydrostatischen Getriebe durch eine Vergrößerung des Pumpenförderstroms bewirkt wird.

Wird die zulässige Drehzahldrückung des Antriebsmotors (infolge des Fahrwiderstandes) unterschritten, so wird der Wandler nicht mehr wie vorbeschrieben drehzahlproportional gesteuert, sondern der Wandler wird so verstellt bzw. geregelt, daß die der fest eingestellten Kennlinie entsprechende Antriebsmotordrehzahl nicht unterschritten wird (Lastbegrenzungsregelung, d.h. anti-abwürge-Regelung).

Die Nachteile der bekannten Ausgestaltungen sind insbesondere folgende.

Veränderung der Steuer- und Regelcharakteristik aufgrund von Verschleiß an hydraulischen Steuerteilen wie z.B. Blenden, Schiebern und dgl. oder mechanischen Steuerteilen wie Steuergliedern, Gasgestänge und sonstige Verstellgestänge.

Nach Eingriffen im System wie z.B. Wechsel des Antriebsmotors, Einspritzpumpe, Gasgestänge, Hydroeinheiten ist eine teilweise bzw. komplette Neueinstellung erforderlich.

Großer Einstellaufwand.

Temperaturabhängigkeit.

Viskositätsabhängigkeit (bei hydraulischen Regelvorrichtungen).

Bei einem Wandler mit drehzahlabhängiger Verstellung (z.B. Fördervolumeneinstellung der Hydropumpe) liegt eine schlechte Ausnutzung der Leistung des Antriebsmotors insbesondere im Bereich niedriger Drehzahlen vor.

Keine Einstellbarkeit der vom Antriebsmotor abgegebenen maximalen Leistung.

Der Erfindung liegt die Aufgabe zugrunde, eine Antriebseinrichtung der eingangs bezeichneten Art so auszugestalten, daß die vom Antriebsmotor zur Verfügung stehende Leistung bzw. das zur Verfügung stehende Drehmoment besser ausgenutzt wird.

Diese Aufgabe wird durch die kennzeichnenden Merkmale des Anspruchs 1 gelöst.

Die erfindungsgemäße Ausgestaltung führt zu einer Antriebseinrichtung, bei welcher der Wandler nicht in Abhängigkeit der Antriebsmotordrehzahl verstellt wird (keine drehzahlproportionale Verstellung), sondern bei welcher der Wandler in Abhängigkeit der durch die erlernte maßgebliche Kennlinie für die zulässige Drehzahldrückung des Antriebsmotors verstellt wird. Die bekannte drehzahlabhängige Verstellung wird im Rahmen der Erfindung somit durch eine von der Drehzahldrückung abhängige Verstellung ersetzt.

Wird also die der jeweiligen Stellung des Einstellgliedes zugehörige zulässige Drehzahldrückung (aufgrund zu geringer Fahrwiderstände) nicht erreicht, so wird der Wandler auf minimales Übersetzungsverhältnis

$$i = \frac{\text{Eingangsdrehzahl}}{\text{Ausgangsdrehzahl}}$$

gesteuert.

Danach wird die Fahrgeschwindigkeit der Maschine bzw. des Fahrzeugs nur noch über die variable Antriebsmotordrehzahl verändert und nicht mehr durch Veränderungen des Übersetzungsverhältnisses.

Wird die zur jeweiligen Stellung des Einstellgliedes zugehörige zulässige Drehzahldrückung (aufgrund größerer Fahrwiderstände) erreicht, so wird der Wandler so geregelt, daß die Antriebsmotordrehzahl die maßgebliche Kennlinie nicht unterschreitet.

Diese Ausgestaltung ermöglicht somit eine gute Leistungs-bzw. Drehmomentausnutzung.

Die Ausgestaltung nach den Ansprüchen 2 bis 4 führen zu einer Antriebseinrichtung, deren Regelvorrichtung der Zusammenhang zwischen der jeweiligen Stellung des Einstellgliedes und der zugehörigen Drehzahl des Antriebsmotors eingegeben bzw. einprogrammiert werden kann oder den Zusammenhang zu lernen bzw. durch Bildung einer Kennlinie (Lernkurve) festzuhalten vermag, und zwar nach Maßgabe der vorhandenen Ausbildung und Einstellung des Antriebsmotors. Hierdurch wird die angestrebte Unabhängigkeit von einer vorgegebenen Einstellung des Antriebsmotors erreicht.

Das diesen Weiterbildungen zugrunde liegende Problem stellt sich insbesondere dann, wenn Teile (wie das Gestänge, die Einspritzpumpe und/oder der Vergaser) der Steuereinrichtung des Antriebsmotors verschleißen oder ausgetauscht bzw. neu eingestellt werden, so daß sich wesentliche Unterschiede zu einer beispielsweise durch die Charakteristik einer Feder vorgegebene Kennlinie einstellen. Bei der erfindungsgemäßen Ausgestaltung wird die wirksame Kennlinie unter Berücksichtigung der Feinheiten von den nach einer Grund-Steuerkennlinie hergestellten Regelgliedern gebildet bzw. erlernt, wodurch auch nach einem Verschleiß bzw. Austausch betreffender Einzelteile des Antriebsmotors die Kennlinie mit der konstruktiven bzw. funktionellen Wirklichkeit der Einzelteile konform ist, wenn sie nach dem Eintritt des Verschleißes bzw. nach dem Austausch bzw. nach der Neueinstellung der Einzelteile gebildet bzw. gelernt wird. Es ist deshalb von Vorteil die Ausgestaltung so zu treffen, daß die Steuerkennlinie wahlweise zu löschen und eine neue Steuerkennlinie einspeicherbar ist.

Die Ausgestaltung nach Anspruch 6 ist von selbständiger erfinderischer Bedeutung, da die durch sie erzielbaren Vorteile unabhängig von der Lösung gemäß Anspruch 1 sind.

Durch eine variable Einstellung der zulässigen Drehzahldrückung gemäß Anspruch 5 wird neben dem Regelverhalten der Antriebsmotor-Lastbegrenzungsregelung auch das Fahrverhalten und die Leistungsentfaltung der von der Antriebseinrichtung angetriebenen Maschine bzw. Fahrzeugs insbesondere im Bereich niedriger bis mittlerer Drehzahl beeinflußt. Dabei ist es möglich, daß die Kennlinie durch den vorhandenen Prozessor automatisch oder mittels eines Einstellgliedes wahlweise einstellbar verschoben bzw. verlagert, eingespeichert bzw. gelernt wird.

Die erfindungsgemäßen Lösungen sind sowohl als Fahrantrieb als auch als Maschinenantrieb zu verwirklichen. Es läßt sich beispielsweise die Fahr- und/oder Arbeitshydraulik eines Baggers oder Radladers erfindungsgemäß so regeln, daß die Abweichung von der Kennlinie ein variabel einstellbares Maß an Drehzahldrückung nicht unterschreitet.

Ein solcher Bagger könnte dann bei variabel möglicher Dieselmotordrehzahl (in Wohngebieten geringere Dieselmotordrehzahl; auf freiem Gelände volle Dieselmotordrehzahl) mit der vorbeschriebenen erfindungsgemäßen Grenzlastregelung arbeiten. Bekannte Bagger werden immer mit einer fest eingestellten Dieselmotordrehzahl entsprechend der Maximal-Dieselmotordrehzahl betrieben. Die Erfindung überwindet diesen Nachteil.

Weiterbildungen der Erfindung sind in weiteren Unteransprüchen beschrieben.

Nachfolgend wird die Erfindung anhand eines in einer Zeichnung dargestellten Ausführungsbeispiels näher erläutert. Es zeigt:

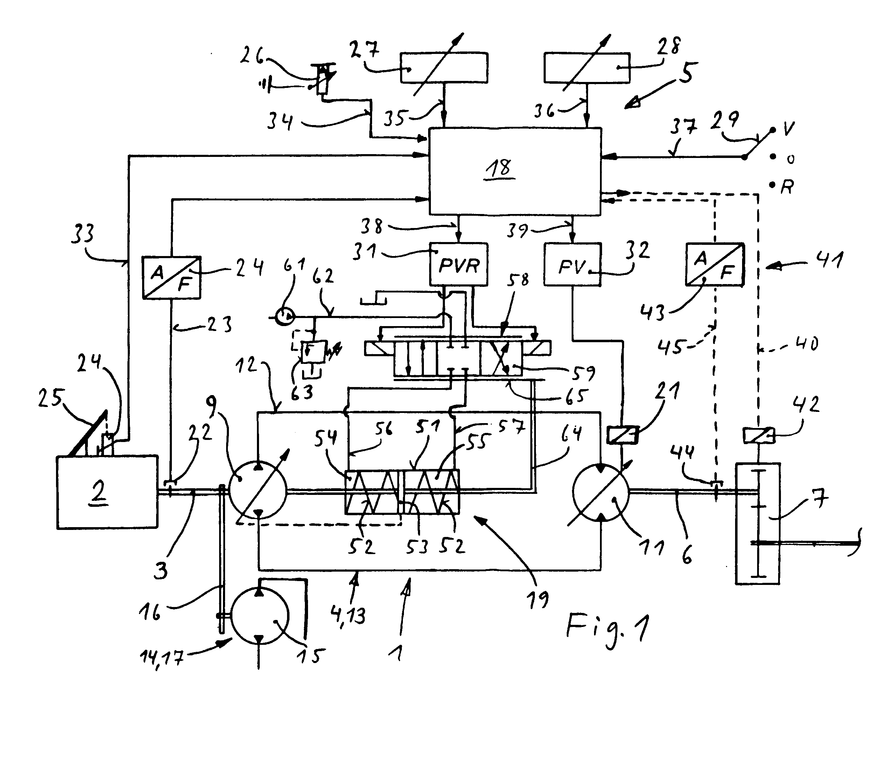

Fig. 1 eine erfindungsgemäß ausgestaltete Antriebseinrichtung in schematischer Darstellung;

Fig. 2 ein Funktionsdiagramm der Antriebseinrichtung.

Die allgemein mit 1 bezeichnete Antriebseinrichtung ist als Fahrantrieb für eine Baumaschine wie einen Radlader, Erdschieber oder fahrbaren Bagger eingerichtet. Die wesentlichen Teile der Antriebseinrichtung 1 sind ein Verbrennungsmotor in Form eines Dieselmotors als Antriebsmotor 2, ein von der Antriebswelle 3 des Antriebsmotors 2 angetriebenes hydrostatisches Getriebe 4 mit einer allgemein mit 5 bezeichneten Regeleinrichtung und ein mit der Abtriebswelle 6 des hydrostatischen Getriebes 4 in Verbindung stehendes mechanisches Getriebe 7, vorzugsweise ein Lastschaltgetriebe. Das hydrostatische Getriebe 4 weist eine von der Antriebswelle 3 angetriebene Hydropumpe 9 und einen Hydromotor 11 auf, die in der Förder- bzw. Schluckmenge einstellbar und für den Betrieb in beide Drehrichtungen eingerichtet sind. Die die Hydroeinheit miteinander verbindende Arbeitsleitung des hydrostatischen Getriebes 4 im geschlossenen Kreislauf ist mit 12 bezeichnet.

Neben dem auch allgemein mit Fahrhydraulik 13 bezeichneten hydrostatischen Getriebe weist die Antriebseinrichtung 1 auch ein zweites angedeutetes hydrostatisches Getriebe 14 mit einer Hydropumpe 15 auf, die durch ein Verteilergetriebe 16 mit der Antriebswelle 3 des Antriebsmotors 2 verbunden ist und für den Antrieb einer weiteren Arbeitsvorrichtung der Baumaschine insbesondere für den Antrieb der Ladeschaufel eines Radladers vorgesehen ist. Das zweite hydrostatische Getriebe ist auch als Arbeitshydraulik 17 bezeichnet. Die Regeleinrichtung 5 kann auch die Pumpe 14 der Arbeitshydraulik 17 mit berücksichtigen und gemäß dem schon beschriebenen Regelalgorythmus verstellen.

Der Regeleinrichtung 5 sind ein elektronisches Regelgerät 18 und eine elektrisch-proportionale Verstellvorrichtung 19 für die Hydropumpe 9 sowie ggf. auch eine elektrisch-proportionale Verstellvorrichtung 21 für den Hydromotor 11 zugeordnet. Letztere Verstellvorrichtung 21 ist andeutungsweise dargestellt. Weitere Regel-oder auch Steuerglieder der Regeleinrichtung 5 sind ein Drehzahlmesser 22 an der Antriebswelle 3 des Antriebsmotors 2, der durch eine Signalleitung 23 mit dem elektronischen Regelgerät 18 verbunden ist, in der ein Frequenz-Analog-Wandler 24 angeordnet ist, ein Positions- bzw. Wegmesser in Form eines Potentiometers 24 für das Gaspedal 25 des Antriebsmotors 2, ein Betriebsartenschalter 26, ein Motordrückungs-Einstellglied in Form eines Potentiometers 27, ein Einstellglied 28 zum sogenannten "Inchen", ein Fahrtrichtungs-Wählschalter 29 und Proportionalverstärker 31,32, die durch Signalleitungen 33 bis 39 mit dem elektronischen Regelgerät 18 verbunden sind. Die Elektronik des Regelgeräts 18 umfaßt einen Speicher bzw. Mikrocomputer mit analogen und digitalen Ein- und Ausgängen, der in der Lage ist, die Reglerkennlinie der Regeleinrichtung 17 nach Maßgabe der Stellungen des Gaspedals 25 und zugehörigen Drehzahlen der Antriebswelle 3 zu bilden und zu speichern.

Außerdem kann der Antriebseinrichtung eine automatische Schalteinrichtung 41 zugeordnet sein, die durch ein mit dem mechanischen Getriebe 7 in Schaltantriebsverbindung stehendes Schaltglied 42 z.B. in Form eines Schaltmagneten, einen Frequenz-Analog-Wandler 43 und einen Drehzahlmesser 44 an der Ausgangswelle 6 des hydrostatischen Getriebes 4 angedeutet ist. Der Drehzahlmesser 44 steht durch eine Signalleitung 45 und über den Wandler 43 mit dem elektronischen Regelgerät 18 in Verbindung. Das Schaltglied 42 ist durch eine Signalleitung 40 mit dem elektronischen Regel gerät 18 verbunden.

Die Funktionsweise des selbstlernenden, prozeßorgesteuerten automotiven Fahrantriebs 1 ist folgende.

Bevor die Antriebseinrichtung 1 zum ersten mal in Betrieb genommen werden kann, muß unter Zuhilfenahme des Betriebsartenschalters 26 die Leerlaufkurve (Lernkurve) des Antriebsmotors 2 "programmiert" werden. Dies geschieht in einfacher Weise durch einmaliges Betätigen des Betriebsartenschalters 26 und durch langsames Gasgeben des Antriebsmotors 2 im unbelasteten Zustand bis zu dessen maximaler Drehzahl. Der im elektronischen Regelgerät 18 vorhandene Prozessor speichert während diesem "Lernvorgang" den Zusammenhang zwischen der Gaspedalstellung und der zugehörigen Leerlaufdrehzahl des Antriebsmotors 2, im vorliegenden Fall ein Dieselmotor, als "Lernkurve" in einem bestimmten Speicherbereich (batteriegepufferter RAM (random access memory)) ab.

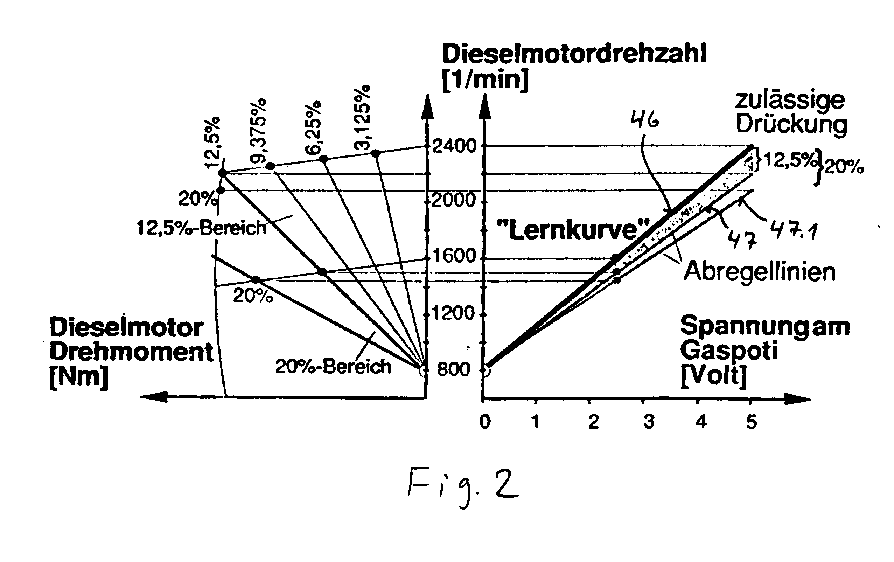

Fig. 2 zeigt das Funktionsdiagramm, wobei auf den drei Achsen die Spannung am Gaspedal-Potentiometer 24, die Dieselmotordrehzahl und das Drehmoment des Dieselmotors 2 bei unterschiedlichen Dieselmotor-Einspritzpumpenstellungen aufgetragen sind.

Durch Einstellung am Motordrückungs-Potentiometer 27 läßt sich in einem Einstellbereich eine wahlweise Motordrückung vorgeben, wodurch eine gegenüber der gelernten Kennlinie 46 verlagerte wirksame bzw. maßgebliche Kennlinie 47 geschaffen wird, die zur gelernten Kennlinie 46 parallel oder winkelverschoben sein oder in jedem beliebigen, mathematisch eindeutig beschreibbaren Zusammenhang verlaufen kann. Auf diese Weise ist es möglich, die Leistungsausnutzung des Antriebsmotors 1 zu begrenzen. Im Funktionsdiagramm sind zwei maßgebliche Kennlinien 47,47.1 bzw. Abregellinien, nämlich eine für etwa 12,5 % und eine für 20 % zulässige Drehzahldrückung des Dieselmotors 2 exemplarisch eingezeichnet.

Die zulässige Drehzahldrückung kann nach Beendigung des Lernvorganges durch Betätigung des Drückungssollwert-Potentiometers 27 zwischen Null und 20 % beliebig eingestellt werden. Durch die variable Einstellung der zulässigen Drehzahldrückung wird neben dem Regelverhalten der Dieselmotor-Lastbegrenzungsregelung auch das dem Dieselmotor 2 (zur jeweils mittels des Gaspedals 25 eingestellten Antriebsdrehzahl) maximal abnehmbare Drehmoment beeinflußt.

Der Einfachheit halber wurde der Zusammenhang zwischen den Stellungen bzw. dem Weg des Gaspedal-Potentiometers 24 und der Dieselmotordrehzahl als gerade Linie eingezeichnet. Sie kann jedoch jeden beliebigen mathematisch eindeutigen und stetigen Funktionsverlauf einnehmen.

Anders als bei bislang bekannten automotiven Fahrantrieben, bei denen mit zunehmender Betätigung des Antriebs-Gaspedals die elektrisch-proportionale Verstellvorrichtung mitverstellt wird (gasabhängige Steuerung) benötigt die erfindungsgemäße Antriebseinrichtung 1 keine solche "Steuerkennlinie".

Die erfindungsgemäße Antriebseinrichtung arbeitet in dem Drehzahlbereich oberhalb der maßgeblichen Kennlinie 47,47.1 als Steuerung und unterhalb als Regelung, wobei die zur jeweiligen Gaspedal-Potentiometereinstellung gehörige zulässige minimale Dieselmotordrehzahl (Lernkurve minus zulässiger Drückung) die Führungsgröße und die momentane Drehzahl des Dieselmotors 2 die Regelgröße bildet.

Während bei allen Betriebszuständen, bei denen aufgrund einer zu geringen Belastung der Antriebseinrichtung die eingestellte zulässige Drückung der Dieselmotordrehzahl nicht unterschritten wird und damit die Regelung auch nicht erforderlich ist, wird die Hydropumpe 9 auf maximales Fördervolumen eingestellt. Hierdurch hängt die Geschwindigkeit der Baumaschine bzw. des Fahrzeugs in diesem Betriebszuständen nur von der Drehzahl des Dieselmotors 2 ab.

Im Stillstand des Fahrzeugs ist die zulässige Drückung Null. Dies bedeutet, daß die Hydraulik den Dieselmotor 2 überhaupt nicht belasten kann, da die Regeleinrichtung 5 die Hydropumpe 9 dann ebenfalls auf Null stellt. Sobald der Fahrer jedoch das Gaspedal 25 betätigt und damit die Spannung am Potentiometer 24 erhöht, ergibt sich eine zunehmende zulässige Drehzahldrückung des Dieselmotors 2 mit dem Effekt, daß die Hydropumpe 9 entsprechend dem gerade anliegenden Fahrwiderstand (Betriebsdruck) auszuschwenken beginnt.

Die programmierte Regelung - zweckmäßigerweise ein PID-Regler - wird dabei unter allen auftretenden dynamischen Bedingungen verhindern, daß die zulässige Drückung des Dieselmotors 2 unterschritten und der Dieselmotor 2 überlastet oder abgewürgt wird.

Nach Erreichen eines gewissen Betriebsdruckes setzt sich die Baumaschine bzw. das Fahrzeug in Bewegung. Bei weiterer Betätigung des Gaspedals 25 wird - wie Fig. 2 zeigt, die zulässige Drehzahldrückung und damit auch das dem Dieselmotor 2 entnommene maximale Drehmoment und die entnommene Leistung immer größer, wodurch die Regelung die von der Fahrhydraulik 13 aufgenommene Leistung durch Vergrößerung bzw. Verkleinerung der Fördermengen- bzw. Durchsatzmengeneinstellungen der Hydropumpe 9 bzw. des Hydromotors 11 immer mehr vergrößern kann. Beim Auftreten plötzlicher Belastungsspitzen im Arbeitsbetrieb wird die Regeleinrichtung 5 die von der Fahrhydraulik 13 aufgenommene Leistung so stark verringern, daß die entsprechende maßgebliche Kennlinie 47,47.1 bzw. Abregellinie nicht unterschritten und der Dieselmotor 2 ebenfalls nicht abgewürgt wird.

Wie Fig. 2 weiter zeigt, wird im vorliegenden Beispiel dem Dieselmotor bei 12,5 % zulässiger Drückung (relativ zu 800 l/min) und bei Nenndrehzahl (2200 l/min) das maximale Drehmoment entnommen.

Wird die zulässige Drückung reduziert, z.B. auf etwa 9,375 % (6,25 %, 3,175 %) so beträgt das dem Dieselmotor 2 abgenommene maximale Drehmoment nur noch etwa 75 % (50 %, 25 %) des maximal möglichen Drehmomentes.

Eine zulässige Drehzahldrückung von mehr als 12,5 %, z.B. 20 % scheint bei Höchstdrehzahl im vorliegenden Beispiel wenig sinnvoll, da der Dieselmotor 2 dann das abgegebene Drehmoment nicht mehr weiter steigern kann.

Es ist jedoch möglich, durch entsprechende Gestaltung der Kennlinie der zulässigen Drückung (in Fig. 2 beispielhaft als Gerade gezeichnet), z.B. als eine gekrümmte Kurve, die Drehmomentaufnahme des Fahrantriebs bei niedrigen Drehzahlen zu beeinflussen und dadurch eine höhere Drehmomentabgabe des Dieselmotors 2 zu erzielen (20 %-Bereich in Fig. 2).

Eine weitere Variante der flexiblen Drückungskurvengestaltung besteht in der Möglichkeit diese so auszuführen, daß der Fahrantrieb unter Last auf die Kennlinie des geringsten Kraftstoffverbrauches gedrückt wird.

Die Verstellvorrichtung 19 und ggf. auch 21 ist von elektro-hydraulischer Bauart. Sie umfaßt einen Zylinder 51 mit einem mittels Federn 52 mittenzentrierten Doppelkolben 53, der im Zylinder 51 zwei Arbeitsräume 54,55 bildet, deren hydraulische, durch Leitungen 56,57 verdeutlichte Beaufschlagung mit einem Steuerdruck durch ein elektromagnetisches Fahrtrichtungsventil in Form eines Regelventils 58 (Proportionalventil) geregelt wird, dessen Ventilschieber 59 durch zu beiden Seiten beiderseits angeordnete Elektromagnete verschiebbar ist, deren Aktivität vom elektronischen Regelgerät 18 über den Proportionalverstärker 31 geregelt wird.

Zur Bereitstellung des Steuerdruckes kann eine an sich bekannte Hilfspumpe 61 konstanten Fördervolumens dienen, die vom Antriebsmotor 2 angetrieben sein kann und in deren Förderleitung 62 das Regelventil 58 angeordnet ist, oder es kann der Steuerdruck auch vom Arbeitsdruck in der Arbeitsleitung 12 abgeleitet werden. Mit 63 ist ein Druckbegrenzungsventil bezeichnet. Zwischen dem Regelventil 58 und der Verstellvorrichtung 19 ist eine sogenannte Wegrückführung zwecks Soll-Istwertvergleichs vorgesehen. Beim vorliegenden Ausführungsbeispiel ist eine mechanische Wegrückführung in Form einer mechanischen Verbindung 64 zwischen dem Kolben 53 (bzw. dessen Kolbenstange) und dem Gehäuse 65 des Regelventils 58, das folglich eine von der Bewegung des Kolbens 53 abhängige Relativverschiebung bezüglich des Ventilschiebers 59 ausführt.

Zusammengefaßt ergeben sich für die selbstlernende mikroprozeßorgesteuerte automotive Antriebseinrichtung mit Antriebsmotor-Lastbegrenzungsregelung folgende Vorteile:

- einfacher modularer hard- und softwareseitiger Aufbau
- geringer Installationsaufwand
- durch Lernvorgang praktisch keine Einstellung erforderlich (Regelbeginn, Regelende, Inchen, usw.)
- sowohl als automotiver Fahrantrieb, als auch als Bagger-Grenzlastregelung (bei variabel möglicher Dieselmotordrehzahl) einsetzbar
- keine Veränderung der Regelcharakteristik im Laufe der Lebensdauer
- schnelle und einfache Anpassung der Regelung auf Veränderungen an Systemkomponenten (neues "Lernen" möglich)
- variabel einstellbare zulässige Antriebsmotordrückung; hierdurch variabel einstellbarer vom Antriebsmotor abgenommener Drehmomentverlauf
- weitere optionale elektronisch gesteuerte Funktionen ohne Zusatz-Elektronik integrierbar, wie z.B. Schaltimpulse für mechanische Lastschaltgetriebe, Zugkraftbegrenzungsregler, Betriebsdatenüberwachungs- und Diagnosesysteme, usw...

**Patentansprüche**

1. Automotive Antriebseinrichtung (1) für Maschinen und Fahrzeuge, insbesondere Fahrantriebseinrichtung für Baufahrzeuge wie Bagger, Radlader und Raupen, bestehend aus einem Antriebsmotor (2) mit durch ein Einstellglied (25) stufenlos veränderlicher Drehzahl und einem Wandler (4) mit einer Regeleinrichtung (5) zur Regelung dessen Abtriebsdrehzahl in Abhängigkeit von einer mittels Signalgebern (22, 24) ermittelten Drehzahlabweichung von einer gewünschten Drehzahl des Antriebsmotors (2), wobei die Regeleinrichtung bei Auftreten der Drehzahlabweichung den Wandler (4) auf ein anderes Übersetzungsverhältnis regelt, dadurch gekennzeichnet, daß der Wandler (4) unabhängig von der Antriebsmotordrehzahl auf minimales Übersetzungsverhältnis gesteuert (verstellt) wird, wenn die sich im Betrieb der Antriebseinrichtung (1) ergebende Antriebsmotordrehzahl größer ist als die durch eine vorgegebene Drehzahldrückung bestimmte Antriebsmotordrehzahl, und bei Erreichen dieser vorgegebenen Drehzahldrückung der Wandler (4) abhängig von der Antriebsmotordrehzahl derart geregelt wird, daß die Antriebsmotordrehzahl eine der vorgegebenen Drehzahldrückung entsprechende maßgebliche Kennlinie (47, 47.1) nicht unterschreitet.

2. Antriebseinrichtung nach Anspruch 1, dadurch gekennzeichnet, daß die maßgebliche Kennlinie (47, 47.1) einer im Sinne einer zulässigen Motordrückung korrigierten, den Zusammenhang zwischen den Stellungen des Einstellgliedes (25) und den sich bei im unbelasteten Zustand (Leerlauf) durchlaufenem Drehzahlbereich ergebenden Drehzahlen des Antriebsmotors (2) bzw. entsprechenden Signalen darstellenden Kennlinie (46) entspricht.

3. Antriebseinrichtung nach Anspruch 2,
dadurch gekennzeichnet,
daß die Regeleinrichtung (5) eine elektronische Regeleinrichtung ist, die einen Speicher aufweist, in den der Zusammenhang zwischen den Stellungen des Einstellgliedes (25) und den sich bei im unbelasteten Zustand (Leerlauf) durchlaufenem Drehzahlbereich ergebenden Drehzahlen als maßgebliche Kennlinie (46) einspeicherbar ist.

4. Antriebseinrichtung nach Anspruch 3,
dadurch gekennzeichnet,
daß der Zusammenhang zwischen den Stellungen des Einstellgliedes (25) und dem den zugehörigen Drehzahlen des Antriebsmotors (2) bzw. entsprechenden Signalen bei im unbelasteten Zustand durchlaufenem Drehzahlbereich des Antriebsmotors (2) automatisch einprogrammiert bzw. gelernt wird.

5. Antriebseinrichtung nach Anspruch 3 oder 4,
dadurch gekennzeichnet,
daß die maßgebliche Kennlinie (47, 47.1) wenigstens in einem Teilbereich im Sinne des geringsten Kraftstoffverbrauchs des Antriebsmotors (2) korrigiert ist.

6. Antriebseinrichtung nach einem der Ansprüche 2 bis 5,
dadurch gekennzeichnet,
daß die Korrektur bzw. Abweichung durch einen Sollwertgeber (27) variabel einstellbar ist.

7. Antriebseinrichtung nach einem der Ansprüche 1 bis 6,
dadurch gekennzeichnet,
daß ein den Einstellweg des Einstellgliedes (25) oder eine entsprechende Größe ermittelnder Signalgeber (24) und ein die Antriebsmotordrehzahl oder eine entsprechende Größe ermittelnder Signalgeber (22) vorgesehen sind, die mit der elektronischen Regeleinrichtung (5) verbunden sind.

8. Antriebseinrichtung nach einem der Ansprüche 1 bis 7,
dadurch gekennzeichnet,
daß der Wandler ein hydrostatisches Getriebe (4) mit wenigstens einer Hydropumpe (9) und wenigstens einem Hydromotor (11) ist, von denen wenigstens eine und/oder einer von verstellbarer Durchsatzmenge und vorzugsweise umkehrbarer Drehrichtung ist bzw. sind.

9. Antriebseinrichtung nach Anspruch 8,
dadurch gekennzeichnet,
daß die Hydropumpe (9) und/oder der Hydromotor (11) jeweils durch eine elektro-hydraulische Verstellvorrichtung (19,21) verstellbar ist bzw. sind.

10. Antriebseinrichtung nach einem der Ansprüche 1 bis 9,
dadurch gekennzeichnet,
daß der Zusammenhang zwischen den Stellungen des Einstellgliedes (25) und den zugehörigen Antriebsmotordrehzahlen zur Zustandserkennung ausgenutzt wird, ob ein positiver oder negativer Kraftfluß, d.h. ein Kraftfluß vom Antriebsmotor (2) auf den Wandler (4) oder umgekehrt (Schubbetrieb) erfolgt.

11. Antriebseinrichtung nach Anspruch 10,
dadurch gekennzeichnet,
daß in Abhängigkeit vom Übergang zum negativen Kraftfluß ein Schaltsignal (Runterschalten) für ein dem Wandler (4) nachgeordnetes Getriebe (7) und/oder für eine Überdrehzahlsicherung des Antriebsmotors (2), der Hydropumpe (9) und/oder des Hydromotors (11) erzeugt wird.

## Claims

1. An automotive drive system (1) for machines and vehicles, in particular a drive system for moving construction vehicles such as excavators, wheel loaders and track-laying vehicles, comprising a driving motor (2) the speed of which can be continuously changed by means of a control member (25) and a converter (4) having control means (5) for controlling its output speed in dependence on a deviation from a desired speed of rotation of the driving motor (2) detected by means of signal transmitters (22, 24), wherein when the speed deviation occurs the control means (5) regulates the converter (4) to another transmission ratio, characterised in that the converter (4) is controlled (adjusted) to minimum transmission ratio independently of the speed of the driving motor, when the speed of the driving motor that results in the operation of the drive system (1) is greater than the speed of the driving motor set by a predetermined depression of the speed of rotation and that on reaching this predetermined depression the converter (4) is controlled in dependence on the speed of the driving motor so that the speed of the driving motor does not fall below a ruling characteristic curve (47, 47.1) corresponding to the predetermined depression.

2. A drive system according to claim 1, characterised in that the ruling characteristic (47, 47.1) corresponds to a characteristic (46) corrected in the sense of a permissible motor depression, representing the relationship between the positions of the control member (25) and the speeds of the driving motor (2), or signals corresponding thereto, that result on passing through the speed range in the unloaded (idling) condition.

3. A drive system according to claim 2, characterised in that the control means (5) is an electronic control means that has a memory in which the relationship between the positions of the control member (25) and the speeds that result on passing through the speed range in the unloaded (idling) condition can be stored as a ruling characteristic (46).

4. A drive system according to claim 3, characterised in that the relationship between the positions of the control member (25) and the associated speeds of the driving motor (2), or signals corresponding thereto that result on passing through the speed range of the driving motor (2) in the unloaded condition (idling) is programmed or learned automatically.

5. A drive system according to claim 3 or claim 4, characterised in that the ruling characteristic (47, 47.1) is corrected in at least one part of the range in the sense of minimising the fuel consumption of the driving motor (2).

6. A drive system according to any one of claims 2 to 5, characterised in that the correction or deviation can be variably adjusted by an intended value transmitter (27).

7. A drive system according to any one of claims 1 to 6, characterised in that a signal transmitter (24) detecting the control position of the control member (25) or a quantity corresponding thereto and a signal transmitter (22) detecting the speed of the driving motor or a quantity corresponding thereto are provided which are connected to the electronic control means (5).

8. A drive system according to any one of claims 1 to 7, characterised in that the converter is a hydrostatic transmission (4) including at least one hydraulic pump (9) and at least one hydraulic motor (11), at least one of which is of adjustable throughput and preferably reversible direction of rotation.

9. A drive system according to claim 8, characterised in that the hydraulic pump (9) and/or the hydraulic motor (11) is or are respectively adjusted by an electro-hydraulic adjusting device (19, 21).

10. A drive system according to any one of claims 1 to 9, characterised in that the relationship between the positions of the control member (25) and the associated speed of the driving motor is used to detect whether there is a state of positive or negative power flow, i.e. a flow of power from the driving motor (2) to the converter (4) or vice versa.

11. A drive system according to claim 10, characterised in that in dependence on the transition to negative power flow a signal for shifting (shifting down) is generated for a gearbox (7) following the converter (4) and/or for means for protecting the driving motor (2), the hydraulic pump (9) and/or the hydraulic motor (11) from excessive speed.

**Revendications**

1. Dispositif d'entraînement (1) automoteur pour machines et véhicules, en particulier dispositif d'entrasnement pour la circulation d'engins de chantier tels qu'excavatrices, chargeurs à roues et engins à chenilles, se composant d'un moteur (2) dont la vitesse de rotation peut varier progressivement ou moyen d'un organe de régloge (25), avec un convertisseur (4) avec un dispositif de régulation (5) pour la régulation de la vitesse de rotation en sortie du convertisseur, en fonction d'un écart mesuré au moyen de capteurs (22, 24) par rapport à une vitesse voulue du moteur (2), le dispositif de régulation (5) intervenant pour changer le rapport de transmission du convertisseur (4) quand apparaît cet écart entre les vitesses de rotation,

**caractérisé** en ce que le convertisseur (4) est commandé (réglé) indépendamment de la vitesse du moteur, pour prendre son rapport de transmission minimum quand la vitesse du moteur, au cours du fonctionnement du dispositif d'entraînement, excède la vitesse déterminée par une diminution prédéterminée de la vitesse de rotation, et que, quand est atteinte cette diminution prédéterminée de la vitesse de rotation, le convertisseur (4) est réglé, indépendamment de la vitesse du moteur, de telle manière que la vitesse du moteur ne descende pas au dessous d'une courbe caractéristique déterminante (47, 47.1) correspondant à la diminution prédéterminée de la vitesse de rotation du moteur.

2. Dispositif d'entraînement selon la revendication 1, caractérisé en ce que la courbe caractéristique de référence (47, 47.1) correspond à une courbe caractéristique (46) corrigée dans le sens d'une diminution admissible de la vitesse du moteur, cette courbe (46) représentant la relation entre les positions de l'organe de réglage (25) et la vitesse de rotation du moteur (2) qui s'établit en l'absence de charge (marche à vide) ou les signaux correspondants à cette vitesse.

3. Dispositif d'entraînement selon la revendication 2, caractérisé en ce que le dispositif de régulation (5) est un dispositif électronique qui présente une mémoire dans laquelle peut être enregistrée, en tant que courbe caractéristique de référence (46), la courbe représentant la relation entre les positions de l'organe de réglage (25) et les vitesses de rotation résultantes dans la plage de vitesses parcourue en l'absence de charge (marche à vide).

4. Dispositif d'entraînement selon la revendication 3, caractérisé en ce que la relation entre les positions de l'organe de réglage (25) et les vitesses correspondantes du moteur (2) ou des signaux correspondants, pendant que ces vitesses évoluent dans la plage de vitesses correspondant à l'absence de charge, est automatiquement introduite dans un programme et/ou est apprise.

5. Dispositif d'entraînement selon la revendication 3 ou 4, caractérisé en ce que la courbe caractéristique déterminante (47, 47.1) est corrigée tout au moins dans une région partielle, dans le sens de la consommation de carburant la plus faible du moteur (2).

6. Dispositif d'entraînement selon une des revendications 2 à 5, caractérisé en ce que la correction et/ou l'écart est réglable de manière variable au moyen d'un organe (27) donnant la valeur de consigne.

7. Dispositif d'entraînement selon une des revendications 1 à 6, caractérisé en ce que sont prévus un émetteur de signaux (24) mesurant la course de réglage de l'organe de réglage (25) ou une grandeur correspondante, et un émetteur de signaux (22) mesurant la vitesse de rotation du moteur ou une grandeur correspondante, ces émetteurs étant reliés au dispositif électronique de régulation (5).

8. Dispositif d'entraînement selon une des revendications 1 à 7, caractérisé en ce que le convertisseur est une transmission hydrostatique (4) avec au moins une pompe hydraulique (9) et au moins un moteur hydraulique (11) dont au moins l'un desquels est à débit réglable et a de préférence la possibilité d'inverser son sens de rotation.

9. Dispositif d'entraînement selon la revendication 8, caractérisé en ce que la pompe hydraulique (9) et/ou le moteur hydraulique (11) est ou sont chaque fois réglable(s) au moyen d'un dispositif électro-hydraulique de correction de réglage (19, 21).

10. Dispositif d'entraînement selon une des revendications 1 à 9, caractérisé en ce que la relation entre les positions de l'organe de réglage (25) et les vitesses de rotation correspondantes du moteur d'entraînement est utilisée pour déterminer s'il y a un transfert de force positif ou négatif, c'est-à-dire s'il y a transfert de force du moteur (2) vers le convertisseur (4), ou inversement (fonctionnement en freinage par le moteur).

11. Dispositif d'entraînement selon la revendication 10, caractérisé en ce que, en fonction du passage en régime de transfert de force négatif, un signal de changement de vitesse (passage sur un rapport inférieur) est engendré pour agir sur une transmission (7) faisant suite au convertisseur (4) et/ou sur une sécurité empêchant l'emballement du moteur (2), de la pompe hydraulique 19) et/ou du moteur hydraulique (11).

Fig. 1

Fig. 2